# EUROPÄISCHE PATENTSCHRIFT

(11) **EP 0 643 947 B1**
(45) Veröffentlichungstag und Bekanntmachung des Hinweises auf die Patenterteilung: **24.03.1999**
(21) Anmeldenummer: 94114961.9
(22) Anmeldetag: 22.09.1994
(51) Int. Cl.: A61C 3/025, B24C 7/00

(54) **Dentaltechnisches Sandstrahlgerät**
Dental sandblast device
Dispositif dentaire de sablage

(30) Priorität: 22.09.1993 DE 4332226
(43) Veröffentlichungstag der Anmeldung: 22.03.1995
(73) Patentinhaber: Wassermann Dental-Maschinen GmbH, 21031 Hamburg (DE)
(72) Erfinder: Puttfarcken, Ulf Dipl.-Ing., D-22850 Norderstedt (DE)
(74) Vertreter: Glawe, Delfs, Moll & Partner

(56) Entgegenhaltungen:
- EP-A- 0 119 735
- DE-A- 3 538 324
- DE-A- 4 122 980

## Beschreibung

Die Erfindung bezieht sich auf ein Sandstrahlgerät für die Dentaltechnik gemäß dem Oberbegriff des Anspruchs 1. Bei einem bekannten Gerät dieser Art (US-A 4 487 582) ist in einem Sandbehälter ein Steigrohr mittig angeordnet, das unten eine Luftdüse und eine Sandeinlaßöffnung enthält. Das Steigrohr endet im oberen Bereich des Behälters, von dem seitlich eine Leitung für das Luft-Sandgemisch abgeht. Ferner mündet im oberen Teil des Behälters eine weitere Luftleitung, die das Förderluftvolumen vergrößert. Das Steigrohr dient in diesem Falle dazu, im Oberraum des Behälters ein aufgewirbeltes, luftiges Sandgemisch zu schaffen, das anschließend durch die Weiterförderleitung abgezogen wird. Diese Ausführung hat den Nachteil, daß der Sandbehälter als solcher von dem aus dem Steigrohr austretenden, scharfen Strom des Sand-Luft-Gemischs beaufschlagt wird und daher Verschleiß unterliegt. Verhältnismäßig weiche Werkstoffe und geringe Wandstärken, wie sie für Einwegbehälter benutzt werden, können in diesem Zusammenhang nicht verwendet werden.

Bei einer anderen bekannten Ausführung eines Pulverstrahlgeräts (DE-A 35 38 324) ist der Pulvervorrat in einem Wechselbehälter enthalten, in welchen von unten eine Lanze einführbar ist, die einerseits einen Luftzuführungskanal, aus dem die Förderluft derart austritt, daß das im Behälter enthaltene Pulver aufgewirbelt wird, und andererseits einen Luftabführungskanal enthält, durch welchen das aufgewirbelte Gemisch abgezogen werden kann. Da jedoch der Feststoffanteil des im Behälter aufgewirbelten Gemischs vom Füllstand abhängt, läßt sich mit dem bekannten Gerät kein gleichmäßiger Gemischstrahl bilden. Auch hat die bekannte Anordnung den Nachteil, daß der Behälter unmittelbar von einem stark bewegten Pulver-Gasstrom beaufschlagt wird und daher lediglich für wenig abrasive und sehr feine Pulver geeignet ist.

Bei einem weiteren bekannten Gerät (DE-A 23 14 294), das einen stationären Sandbehälter aufweist, ist in diesem ein Steigrohr mit unten angeordneter Düse und Sandzulauföffnung vorgesehen. Das Steigrohr erweitert sich nach oben und mündet in einer quer dazu verlaufenden Druckluft-Förderleitung, die das im Steigrohr gebildete Sand-Luft-Gemisch mit sich fortführt. Am oberen Ende des Steigrohrs sind Öffnungen vorgesehen, die eine Strömung aus Luft und Schleifmittelteilchen aus dem Steigrohr zurück in den Behälter führen. Die Verwendung von Einwegbehältern für das Strahlmittel ist bei dem bekannten Gerät nicht möglich.

Der Erfindung liegt die Aufgabe zugrunde, ein Sandstrahlgerät der im Gattungsbegriff des Anspruchs 1 genannten Art zu schaffen, das einerseits einen gleichmäßigen und leicht einstellbaren Bearbeitungsstrahl liefert und andererseits die Verwendung von wechselbaren und vorzugsweise als Einwegbehälter ausgebildeten Strahlmittelbehältern ermöglicht.

Die erfindungsgemäße Lösung besteht in den Merkmalen des Anspruchs 1 und vorzugsweise denen der Unteransprüche.

Nach der Erfindung wird zunächst in herkömmlicher Weise das Strahlmittel mittels eines Druckgasstrahls in einen Förderkanal gesogen, wo sich ein Gemisch aus Druckgas und Strahlmittel bildet. In einem gewissen Abstand von dem Eintrittsbereich des Strahlmittels, vorzugsweise nach einer Strecke, nach welcher man eine Vergleichmäßigung des Gemischs erwarten kann, ist der Förderkanal zur Seite hin in den Strahlmittelbehälter hinein geöffnet, der im übrigen geschlossen ist. Dadurch ergibt sich eine entspannende Wirkung auf den Gemischstrom. Die Entspannung ist nicht unbedingt mit einer Druckabsenkung verbunden, weil sich im Strahlmittelbehälter ein Druck einstellt, der dem Druck des Gemischstroms im Bereich der Öffnung entspricht. Sollte sich jedoch in dem Förderkanal aus irgendwelchen Gründen ein stationärer oder instationärer Überschuß an Strahlmittel oder Druckgas einstellen, so wird der Überschuß an dieser Stelle in den Behälter abgeleitet. Pulsationen können daher nicht entstehen. Falls zu viel Strahlmittel in den Förderkanal eingesogen wird und das Gemisch demzufolge zu dicht wird, wird durch die Öffnung auch ein großer Teil des Strahlmittelüberschusses wieder in den Behälter abgeführt. Man erreicht auf diese Weise einen gleichmäßigen Gemischstrom.

Vorzugsweise ist die Entspannungsöffnung so ausgebildet, daß überschüssiges Strahlmittel nach allen oder vielen Seiten hin aus dem Förderstrom ausgeschieden werden kann, so daß dadurch der Auslaß von überschüssigem Strahlmittel auf hinreichendem Umfang möglich wird.

Im Anschluß an die Entspannungsöffnung ist eine mit dem Förderkanal vor der Erweiterung fluchtende Weiterförderöffnung angeordnet, die zweckmäßigerweise einen kleineren Querschnitt als der Förderkanal vor der Entspannungsöffnung aufweist. Die Weiterförderöffnung schneidet sozusagen einen Teilquerschnitt aus dem ankommenden Gemischstrom aus, der zur Bearbeitungsstelle weitergeführt wird. Dabei kann gleichwohl die Menge des weitergeführten Fördergases gleich bleiben, wenn der Strahlmittelbehälter geschlossen ist. Der gegenüber dem Förderkanal vorzugsweise verringerte Querschnitt der Weiterförderöffnung führt dann nicht nur zur Abtrennung des in dem überschüssigen Querschnittsteil des Stroms befindlichen Strahlmittels, sondern auch zu einer Verringerung der Dichte des weitergeführten Stroms. Die Weiterförderöffnung sollte aber nicht so wesentlich kleiner sein als der Querschnitt des Förderkanals vor der Entspannungsöffnung, daß sich die Stabilität des Vorgangs gefährdende Geschwindigkeitsunterschiede ergeben. Beispielsweise sollte das Durchmesserverhältnis des Förderkanals und der Weiterförderöffnung nicht größer als 5:1, vorzugsweise nicht größer als 3:1, weiter vorzugsweise nicht größer als 2:1 sein.

Wichtig ist, daß die Anordnung geeignet ist, das im Bereich der Entspannungsöffnung nicht weitergeführte Strahlmittel staufrei abzuführen. Dazu dient einerseits das Merkmal, daß der Rand der Weiterförderöffnung zur Abweisung von außerhalb der Weiterförderöffnung ankommenden Strahlmittel ausgebildet ist. Zum anderen soll die Entspannungsöffnung so ausgebildet sein, daß sich vor der Weiterförderöffnung bzw. in der Entspannungsöffnung kein Strahlmittel ansammeln kann. Zu diesem Zweck kann nach der Erfindung der Rand der Weiterförderöffnung keil- oder schneidenförmig ausgebildet sein.

Zweckmäßigerweise ist die Weiterförderöffnung in einem wechselbaren Einsatzteil angeordnet. Zum einen erlaubt dies eine leichte Einstellung des Gemischstroms auf die gewünschte Stärke durch Wahl eines größeren oder kleineren Durchmessers der Weiterförderöffnung. Zum anderen erlaubt dies die Auswechslung dann, wenn die keil- oder schneidenförmige Ausbildung des Rands der Weiterförderöffnung so verschlissen ist, daß der Strahlmittelüberschuß nicht mehr staufrei abgewiesen wird.

Die Entspannungsöffnung soll oberhalb des höchsten Strahlmittelspiegels gelegen sein, damit das abgewiesene Strahlmittel die Entspannungsöffnung frei verlassen kann.

Der Strahlmittelbehälter ist zur Aufnahme eines an seinem unteren Ende durch eine Folie geschlossenen Strahlmittel-Einwegbehälters ausgebildet. Der Förderkanal ist in einer entgegen der Einschubrichtung des Einwegbehälters angeordneten Lanze angeordnet, die beim Einschieben des Einwegbehälters in den Strahlmittelbehälter von der Lanze durchstoßen wird. Da die Richtung der Lanze mit der Einschubrichtung übereinstimmt, wird die Folie aber nicht großflächig geöffnet; vielmehr legt sich der Öffnungsrand der Folie mehr oder weniger an den Umfang der Lanze an, so daß bei fallender Einschubrichtung das in dem Behälter befindliche Material nicht nennenswert herausfällt. Ein dichter Anschluß des Einwegbehälters unterhalb der Einlaßöffnung für das Strahlmittel in der Lanze ist nicht erforderlich, weil der Strahlmittelbehälter um den Einwegbehälter herum druckfest verschließbar ist. Aus demselben Grund kann der Einwegbehälter auch aus dünnem Material ausgeführt sein.

Die Bezeichnung Sandstrahlgerät soll keine Einschränkung auf Sand als Strahlmittel beinhalten; vielmehr werden insbesondere bei Feinstrahlgeräten Strahlmittel verwendet, die nicht eigentlich als Sand bezeichnet werden können, beispielsweise Korund oder Glaskugeln.

Die Erfindung wird im folgenden näher unter Bezugnahme auf die Zeichnung erläutert, die ein vorteilhaftes Ausführungsbeispiel der Erfindung veranschaulicht. Es zeigen:

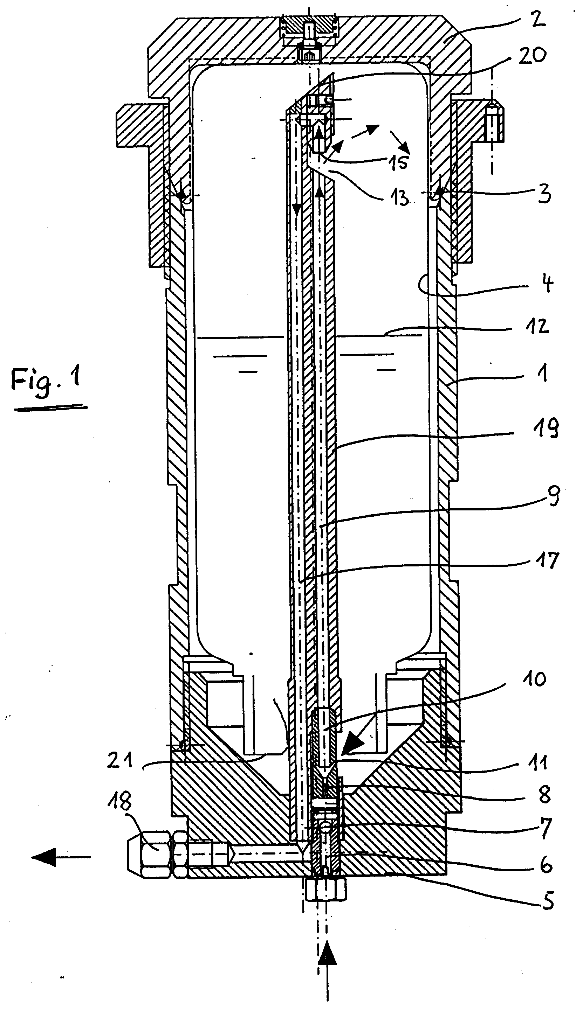

- Fig.1: einen vertikalen Längsschnitt durch den Strahlmittelbehälter und
- Fig. 2 u. 3: zwei unterschiedliche Seitenansichten eines Details in größerem Maßstab.

Der Strahlmittelbehälter 1, der senkrecht oder schwach geneigt in dem Gerät eingebaut ist, kann oben durch Abnehmen eines Schraubdeckels 2 geöffnet werden, der unter Einschluß einer Dichtung 3 druckdicht verschlossen werden kann. Er kann von oben her mit dem Strahlmittel befüllt werden, indem entweder das Strahlmittel unmittelbar in den Strahlmittelbhälter gegeben wird oder ein Strahlmittel-Einwegbehälter 4 eingesetzt wird, dessen langgestreckte Gestalt derjenigen des Strahlmittelbehälters 1 angepaßt ist. Beide können beispielsweise im Horizontalschnitt zylindrisch oder rechteckig sein.

Im Boden 5 des Behälters 1 mündet eine Druckluftleitung 6 mit einem Rückschlagventil 7, das das Eindringen von Strahlmittel beim Abschalten des Luftdrucks verhindert. Dem Leitungsanschluß 6 ist ein Druckreduzierventil vorgeschaltet, das es gestattet, den Luftdruck auf einen für die jeweiligen Strahleigenschaften geeigneten Wert einzustellen. Die Druckluftzufuhrleitung endet in einer Düse 8, oberhalb der sich der Förderkanal 9 öffnet. Zwischen dem aus verschleißfestem Material ausgeführten unteren Ende 10 des Förderkanals und der Düse 8 ist eine ringschlitzförmige Einlaßöffnung 11 für Strahlmittel gebildet. Die Weite dieser Einlaßöffnung kann durch Heben oder Senken des Düsenkörpers 8 verändert werden. Dadurch kann auch die jeweilige Menge des eingelassenen Strahlmittels und damit die Dichte des Bearbeitungsstrahls eingestellt werden. Im Bereich der Einlaßöffnung 11 bildet sich nach der Bernoullischen Beziehung ein Unterdruck, durch den das leicht fließfähige Strahlmittel eingesogen und dem Druckgasstrom im Förderkanal 9 beigemischt wird.

Oberhalb des höchsten Strahlmittelspiegels 12 im Behälter 1 endet der Förderkanal 9 in Form einer Öffnung 13. Fluchtend mit dem Förderkanal 9 über dessen Ende setzt sich der Förderkanal in Form einer Bohrung 14 fort, deren untere Öffnung, die im vorliegenden Fall als Weiterförderöffnung 15 bezeichnet wird, in einer Distanz oberhalb des oberen Endes des Förderkanals 9 liegt, die vorzugsweise in der Größenordnung des 0,5-bis 4-fachen Durchmessers des Förderkanals 9 liegt.

Die Bohrung 14 geht über die Horizontalbohrung 16 in einen Weiterförderkanal 17 über, der parallel und entgegengesetzt zum Förderkanal 9 nach unten führt und schließlich über die Armatur 18 an eine Förderleitung anschließbar ist, die zur Verwendungsstelle führt. Die Kanäle 9 und 17 sind in einer Lanze 19 angeordnet, die am oberen Ende 20 derart angeschärft und/oder abgeschrägt ist, daß sie die Verschlußfolie 21 des Einwegbehälters 4 zu öffnen vermag, wenn dieser in den Strahlmittelbehälter 1 eingesetzt wird, ohne daß die Folie so großflächig zerreißt, daß der Inhalt sich in den Strahlmittelbehälter 1 ergießt. Es genügt, wenn die Öffnung so groß ist, daß das Strahlmittel aus dem Einwegbehälter in der ständig erforderlichen Menge zu der Einlaßöffnung 11 nachfließen kann. Zu diesem Zweck kann im Einlaßbereich der Lanze 19 auch eine Einsenkung vorgesehen sein.

Die Bohrung 14 mit der Weiterförderöffnung 15 ist in einem Einsatzstück 22 vorgesehen, das in eine entsprechende Aufnahme der Lanze 19 eingesetzt und mittels beispielsweise einer Madenschraube 23 in der gewünschten Stellung gesichert werden kann.

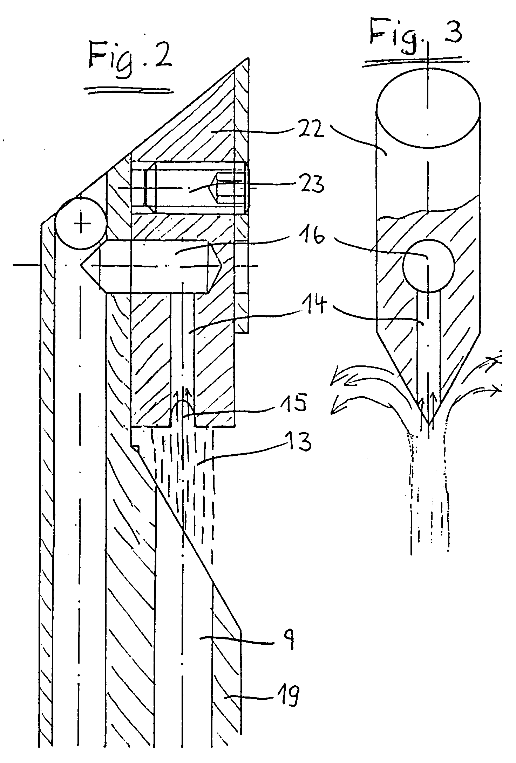

Die Bohrung 14 und die Weiterförderöffnung 15 haben einen kleineren Durchmesser als der Förderkanal 9. Dies wird in Fig. 2 besonders deutlich. Nur ein Ausschnitt aus dem in der gestrichelten Weise aus dem Förderkanal 9 austretenden Gemischstroms kann daher von der Weiterförderöffnung 15 aufgenommen werden. Der Überschuß wird von dem Rand der Weiterförderöffnung 15 abgewiesen und fällt in den Strahlmittelbehälter zurück. Damit dies staufrei und ohne Beeinträchtigung des Gemischstrahls geschieht, ist das untere Ende des Einsatzteils 22 um die Weiterförderöffnung 15 herum im Beispiel der Fig. 2 und 3 keilförmig abgeschrägt. Die abgewiesenen Partikeln werden daher ohne Umwege und ohne sich aufstauen zu können in den Strahlmittelbehälter reflektiert. Auch ist die Öffnung 13 so ausgeführt und um die Mündung des Förderkanals 19 herum so abgeschrägt, daß kein Stau auftreten kann. Andererseits findet die Luft, die ggf. zur Erhaltung der Luftbilanz in diesem Bereich der Weiterförderöffnung 15 zuströmt, freien Zutritt. Das Einsatzstück 22 kann leicht ausgewechselt werden, wenn ein größerer oder kleinerer Durchmesser der Bohrung 14 zur Vergrößerung oder Verringerung der Strahldichte erwünscht ist oder die Keilform verschlissen ist.

## Patentansprüche

1. Dentaltechnisches Sandstrahlgerät mit einem Strahlmittelbehälter (1), der zum Mischen des Strahlmittels mit einem Fördergasstrom in Bodennähe eine Druckgasdüse (8) enthält, die in Verbindung mit einer Einlaßöffnung (11) für das Strahlmittel in einen freistehenden Förderkanal (9) gerichtet ist, der in Abstand von der Einlaßöffnung (8) eine zu dem druckfest verschließbaren Strahlmittelbehälter (1) offene Entspannungsöffnung (13) aufweist, wobei ein Weiterförderkanal (17) zum Herausführen des Druckgas-Strahlmittel-Gemisches aus dem Strahlmittel-behälter (1) vorgesehen ist, dessen Weiterförderöffnung (15) in Förderverbindung mit der Entspannungsöffnung (13) steht, dadurch gekennzeichnet, daß der Weiterförderkanal (17) zusätzlich zu dem Förderkanal (9) in einer oben geschlossenen Lanze (19) angeordnet ist und seine Weiterförderöffnung (15) im Anschluß an die Entspannungsöffnung mit dem Förderkanal (9) fluchtet.

2. Sandstrahlgerät nach Anspruch 1, dadurch gekennzeichnet, daß die Weiterförderöffnung (15) einen kleineren Querschnitt als der Förderkanal (9) aufweist.

3. Sandstrahlgerät nach Anspruch 1 oder 2, dadurch gekennzeichnet, daß der Rand der Weiterförderöffnung (15) keil- oder schneidenförmig ausgebildet ist.

4. Sandstrahlgerät nach einem der Ansprüche 1 bis 3, dadurch gekennzeichnet, daß die Weiterförderöffnung (15) in einem wechselbaren Einsatzteil (22) angeordnet ist.

5. Sandstrahlgerät nach einem der Ansprüche 1 bis 4, dadurch gekennzeichnet, daß die Entspannungsöffnung (13) oberhalb des höchsten Strahlmittelspiegels (12) gelegen ist.

6. Sandstrahlgerät nach einem der Ansprüche 1 bis 5, dadurch gekennzeichnet, daß die Weiterförderöffnung in einer Distanz oberhalb des oberen Endes des Förderkanals (9) liegt, die etwa dem 0,5 bis 4fachen Durchmesser des Förderkanals (9) entspricht.

7. Sandstrahlanordnung mit einem Sandstrahlgerät nach einem der Ansprüche 1 bis 6, dadurch gekennzeichnet, daß sie in dem Strahlmittelbehälter (1) des Sandstrahlgeräts einen Strahlmittel-Einwegbehälter (4) enthält, dessen unteres Ende durch eine von der Lanze (19) durchstoßene Folie (21) verschlossen ist.

## Claims

1. A dental sandblasting apparatus with a blasting medium container (1) which for mixing the blasting medium with a conveying-gas flow in the vicinity of the base includes a compressed-gas nozzle (8) which in combination with an inlet opening (11) for the blasting medium is directed into a free-standing conveyor duct (9) which at a distance from the inlet opening (8) has an expansion opening (13) open towards the blasting medium container (1) which can be closed in a pressure-resistant manner, wherein a transfer duct (17) is provided for directing the compressed gas-blasting medium mixture out of the blasting medium container (1), the transfer opening (15) of which is in conveying communication with the expansion opening (13), characterised in that in addition to the conveyor duct (9) the transfer duct (17) is disposed in an upwardly closed lance (19) and, adjacent the expansion opening, its transfer opening (15) is in alignment with the conveyor duct (9).

2. A sandblasting apparatus according to Claim 1, characterised in that the transfer opening (15) is of smaller cross-section than the conveyor duct (9).

3. A sandblasting apparatus according to Claim 1 or 2, characterised in that the edge of the transfer opening (15) is in the form of a wedge or cutting edge.

4. A sandblasting apparatus according to any one of Claims 1 to 3, characterised in that the transfer opening (15) is disposed in a changeable insert part (22).

5. A sandblasting apparatus according to any one of Claims 1 to 4, characterised in that the expansion opening (13) is situated above the maximum blasting medium level (12).

6. A sandblasting apparatus according to any one of Claims 1 to 5, characterised in that the transfer opening is situated at a distance above the upper end of the conveyor duct (9) which corresponds approximately to 0.5 to 4 times the diameter of the conveyor duct (9).

7. A sandblasting assembly with a sandblasting apparatus according to any one of Claims 1 to 6, characterised in that in the blasting medium container (1) of the sandblasting apparatus there is a disposable blasting medium container (4), the lower end of which is closed by a foil (21) pierced by the lance (19).

## Revendications

1. Dispositif de sablage dentaire comportant un réservoir de produit de sablage (1) qui contient, pour le mélange du produit de sablage avec un courant de gaz de transport, à proximité du fond, une buse de gaz comprimé (8), qui en liaison avec un orifice d'entrée (11) pour le produit de sablage, est dirigée vers un canal de transport (9) dégagé, lequel présente, à distance de l'orifice d'entrée (11), un orifice de détente (13) ouvert vers le réservoir de produit de sablage (1), qui peut fermé de manière à résister à la pression, un prolongement (17) du canal de transport étant prévu pour faire sortir le mélange de gaz sous pression et de produit de sablage hors du réservoir de produit de sablage (1), prolongement dont l'orifice (15) pour la poursuite du transport est en communication avec l'orifice de détente (13), caractérisé en ce que le prolongement (17) du canal de transport est disposé, en plus du canal de transport (9), dans une lance (19) fermée à sa partie supérieure, et son orifice (15) pour la poursuite du transport est situé à la suite de l'orifice de détente et aligné avec le canal de transport (9).

2. Dispositif de sablage selon la revendication 1, caractérisé en ce que l'orifice (15) pour la poursuite du transport présente une plus petite section que le canal de transport (9).

3. Dispositif de sablage selon la revendication 1 ou 2, caractérisé en ce que le bord de l'orifice (15) pour la poursuite du transport est en forme de coin ou de lame.

4. Dispositif de sablage selon l'une des revendications 1 à 3, caractérisé en ce que l'orifice (15) pour la poursuite du transport est disposé dans un insert (22) échangeable.

5. Dispositif de sablage selon l'une des revendications 1 à 4, caractérisé en ce que l'orifice de détente (13) est situé au-dessus du niveau maximum (12) du produit de sablage.

6. Dispositif de sablage selon l'une des revendications 1 à 5, caractérisé en ce que l'orifice pour la poursuite du transport se situe au-dessus de l'extrémité supérieure du canal de transport (9), à une distance qui correspond à peu près à 0,5 à 4 fois le diamètre du canal de transport (9).

7. Equipement de sablage comportant un dispositif de sablage selon l'une des revendications 1 à 6, caractérisé en ce qu'il contient dans le réservoir de produit de sablage (1) du dispositif de sablage, un réservoir jetable de produit de sablage (4), dont l'extrémité inférieure est fermée par une feuille (21) transpercée par la lance (19).
